(19) **Europäisches Patentamt / European Patent Office / Office européen des brevets**

(11) **EP 4 687 332 A1**

(12) # EUROPEAN PATENT APPLICATION

(43) Date of publication:
04.02.2026 Bulletin 2026/06

(21) Application number: 25191489.1

(22) Date of filing: 24.07.2025

(51) International Patent Classification (IPC):
$H04L\ 45/02^{(2022.01)}$        $H04L\ 45/00^{(2022.01)}$

(52) Cooperative Patent Classification (CPC):
H04L 45/70; H04L 45/08

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 02.08.2024 US 202418793439

(71) Applicant: Nokia Solutions and Networks Oy
02610 Espoo (FI)

(72) Inventors:
• KODIALAM, Muralidharan
Austin, TX (US)
• LAKSHMAN, TV
Morganville, NJ (US)

(74) Representative: Nokia EPO representatives
Nokia Technologies Oy
Karakaari 7
02610 Espoo (FI)

(54) **ML APPROACHES FOR JOINT OPTIMIZATION OF COMPUTATION AND NETWORK RESOURCES BY ROBUST PLACEMENT AND ROUTING**

(57)    In some embodiments, there may be provided a method that includes learning, by a machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function; and outputting, by the machine learning model, the first output and the second output to configure segment routing on the network and to configure placement of the at least one virtual network function. Related systems and articles of manufacture are also described.

**Description**

**FIELD**

The subject matter described herein relates to machine learning used to determine node placement and routing.

**BACKGROUND**

Machine learning (ML) models may learn via training. The ML model may take a variety of forms, such as an artificial neural network (or neural network, for short), decision trees, and/or the like. The training of the ML model may be supervised (with labeled training data), semi-supervised, or unsupervised. When trained, the ML model may be used to perform an inference task.

**SUMMARY**

In some embodiments, there may be provided a method including receiving, as a first input to a machine learning model, at least one traffic matrix indicating at least a traffic flow between a source node and a destination node of a network; receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function; learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function; and outputting, by the machine learning model, the first output and the second output to configure segment routing on the network and to configure placement of the at least one virtual network function.

In some variations, one or more of the features disclosed herein including the following features can optionally be included in any feasible combination. The learning by the machine learning model may further include using, as the at least one traffic matrix, an initial traffic matrix for an initial segment from the source node to a first intermediate node where a first virtual network function is placed. The learning of the first output and the second output further may include minimizing a maximum link utilization for the one or more links of the network while constraining the learning based on a capacity of a first virtual network function type and a placement count of the first virtual network function type. The learning may iterate over each segment of the network between the source node and the destination node, wherein each segment represents a placement location for a corresponding virtual network function. The learning by the machine learning model may further include using, as the at least one traffic matrix, a virtual traffic matric indicating an updated traffic flow the segment, which represents the placement location for the corresponding virtual network function, to the destination node. The machine learning model may include a neural network, and wherein the learning is based at least on backpropagation to learn the first output. The learning further may include fixing the second output comprising placement within the network of the at least one virtual network function, and continuing the learning, by the machine learning model, to further an updated first output comprising an updated routing variable.

The above-noted aspects and features may be implemented in systems, apparatus, methods, and/or articles depending on the desired configuration. The details of one or more variations of the subject matter described herein are set forth in the accompanying drawings and the description below. Features and advantages of the subject matter described herein will be apparent from the description and drawings, and from the claims.

**DESCRIPTION OF DRAWINGS**

In the drawings,

FIG. 1A depicts an example of a network management system including a machine learning (ML) model, in accordance with some embodiments;

FIG. 1B shows a network including a source node *i* and a destination node *j* including virtualized network functions (VNFs), in accordance with some embodiments;

FIG. 1C, 1D, and 1E depicts flows between nodes, in accordance with some example embodiments;

FIGs. 2A-2B depict examples of a machine learning (ML) models, in accordance with some embodiments;

FIG. 3 depicts an example of a process for learning routing and VNF placement, in accordance with some embodiments;

FIG. 4 depicts an example of a ML model, in accordance with some embodiments;

FIG. 5 depicts an example of a network node, in accordance with some embodiments; and
FIG. 6 depicts an example of a computing system, in accordance with some embodiments.

Like labels are used to refer to same or similar items in the drawings.

**DETAILED DESCRIPTION**

The joint placement of computing resources and routing in a network is an aspect of network optimization, particularly in the context of virtualized network functions (VNFs). The process of joint placement of computing resources and routing in the network involves strategically allocating computing resources, such as virtual machines (VMs) or containers, and determining optimal routes for data traffic within the network. For example, a virtual machine may provide a node, which is configured to provide one or more VNFs. The VNFs are software-based network functions (that are hosted, as noted, in, e.g., a virtual machine) that can be dynamically deployed and scaled in the network. The VNF may provide for example a virtualized network service, such as a virtualized router, a virtualized firewall, WAN optimization, network address translation (NAT) services, policy control functions (PCFs), load balancers, routers, switches, content delivery points, cellular base stations, intrusion detection systems, session management functions (SMFs), and/or other functions. A goal of the placement of resources, such as node configured with a VNF, and routing is to efficiently utilize network resources while meeting various performance objectives, such as minimizing latency, maximizing throughput, ensuring fault tolerance, and/or the like. The placement of the VNFs within the network impacts both the performance and cost of network services.

The VNF placement arises when determining the one or more optimal locations to deploy one or more VNF instances within a network infrastructure. This placement involves making strategic decisions about where to place one or more VNFs to meet various performance, resource utilization, and cost constraints. Consideration in the VNF placement include network topology (e.g., the underlying network topology), traffic patterns (e.g., analyzing traffic matrices and predicting network traffic patterns), resource constraints (e.g., VNFs have specific resource requirements and placing the VNFs while considering resource constraints at the placement location), and/or latency and bandwidth (e.g., minimizing latency and ensuring sufficient bandwidth for VNF communication), while considering that the VNF placement should also enhance network efficiency, reduce operational costs, and optimize the overall performance of virtualized network infrastructures.

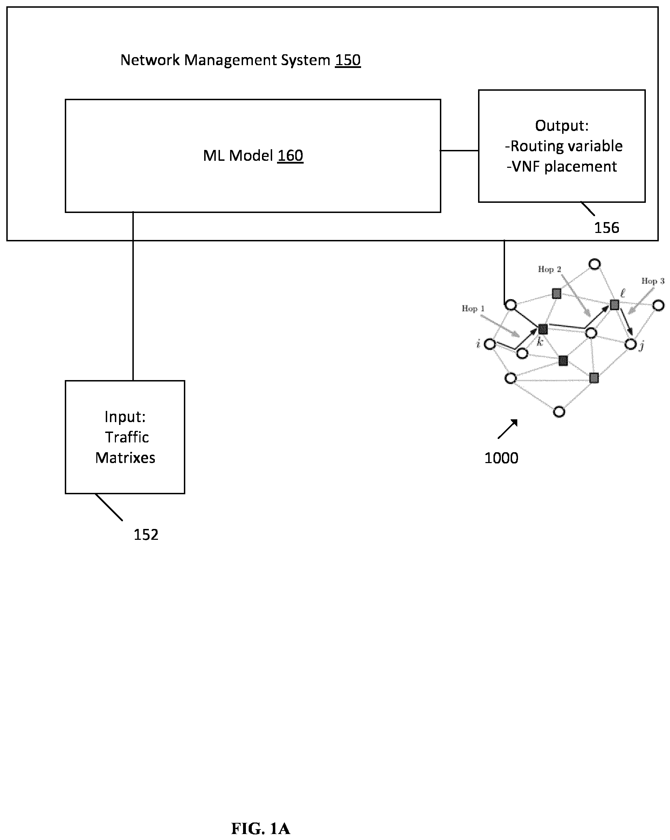

FIG. 1A depicts an example of a network management system 150 including a machine learning (ML) model 160 (e.g., a neural network and/or other type of ML model) that learns, using at least at least one traffic matrix 152 and information regarding a network topology of the network 1000, an output 156 comprising a routing variable (which is defined as a fraction of traffic that originates from a source node to a destination node via an intermediate node) and a VNF placement within the network 1000. The routing variable and VNF placement are then used by the network management system 150 to configure routing and VNF placement at the network 1000.

In operation for example, a network, such as network 1000, being configured for VNF placement and routing may be characterized by for example one or more of the following parameters:

  nodes (e.g., a network comprises a certain quantity (n) nodes representing various locations or network entities within the network architecture of for example network 1000);
  links (e.g., there are a certain quantity $(m)$ of links $(\ell)$ connecting the nodes, wherein each link $\ell$ possesses a specific capacity, such as C(') that defines a maximum amount of traffic the link $\ell$ can handle);
  traffic matrices (e.g., a network is subject to T traffic matrices, wherein $d_{ij}(t)$ represents the traffic flow between nodes $i$ and $j$ in traffic matrix $t$ which is an element ($\in$) of $T$, wherein the total traffic flow across all matrices is given by $L = \max_t \Sigma_i \Sigma_j d_{ij}(t)$);
  virtual network functions (VNFs);
  VNF placement; and
  routing within the network, such as connection routing.

With respect to the VNFs, the network 1000 may incorporate $M$ types of VNFs, each of which is configured to perform a specific processing task. In the examples disclosed herein, it is assumed that all traffic traverses all $M$ types of VNF types in a pre-specified order. For example, a first type of VNF may correspond to a firewall while a second type of VNF may correspond to a load balancer. Moreover, it may be assumed that the VNFs are numbered in the order they are to be traversed on a path from a source node $i$ to a destination node $j$. Although the example described herein assumes all traffic traverses all types of VNFs, this is for simplicity of explanation as the disclosed process for VNF placement and routing can also handle different types of traffic that have to traverse different sets of VNFs.

With respect to VNF placement, an objective is to place a quantity of $v_m$ VNFs of type $m$ (where $m$ is between $1 \leq m \leq M$ which is the total quantity of types) in the network, and the capacity $U_m$ of each VNF of type m is defined as

$$U_m = \left\lceil \frac{L}{v_m} \right\rceil .$$

to ensure that all the VNF capacities will be used as much as possible, wherein L is the total amount of traffic carried by the network (e.g., L is a sum of all entries in a traffic demand matrix).

With respect to connection routing, every connection within the network traverses each type of VNF $1, 2, \ldots, M$ in order before reaching its final destination. As noted, a goal for the ML model is to determine an optimal placement of the VNFs and determine a routing scheme (e.g., routing parameters) that accommodates a set of $T$ traffic matrices without violating any link or VNF capacity bounds.

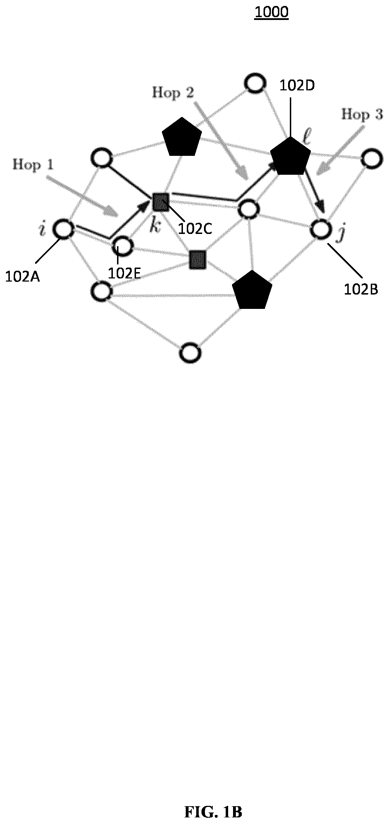

FIG. 1B shows the network 1000 including a source node $i$ 102A and a destination node $j$ 102B. In the example of FIG. 1B, there are two types of VNFs. At FIG. 1B, the first VNF type is illustrated with a square and the second VNF type is illustrated with a pentagon. In the example of FIG. 1B, there are M types of VNFs (e.g., 2 types corresponding to squares and pentagons), and the traffic flow of packets starts at the source node i 102A but must traverse through at least the first VNF type (which is illustrated with the square) and then the second VNF type (which is illustrated with a pentagon) in that order of the first VNF type and then the second VNF type before reaching the destination node $j$ 102B.

In the routing mechanism configured to provide the VNF placement and routing, each connection traverses a total of M+1 hops (or, e.g., segments) as shown in FIG. 1B. In this example, there are 3 hops (as $M = 2$ types of VNFs + 1), such as a first hop (from node $i$ 102A to node $k$ 102C), a second hop (from node $k$ 102C to node $l$ 102D), and the third hop (from node $l$ 102D to node $j$ 102B), although other quantities of VNF types and hops may be implemented as well. In the example of FIG. 1B, the 3 hops are structured to ensure efficient routing through the network 1000. The routing mechanism is described further below.

With respect to routing on the network 1000, shortest path routing may be used, although other types of routing protocols may be used as well. In the case of shortest path routing for example, each segment (e.g., hop) in the routing process corresponds to a shortest path between a source node and a destination node. On the first hop (e.g., segment) for example, the shortest path is taken from node $i$ 102A to node $k$ 102C via node 102E. This shortest path segment routing may ensure that traffic is directed along the most efficient routes, minimizing latency, and optimizing the overall network performance.

With respect to paths to the VNFs, the connection from a source node to a destination node comprises of M + 1 hops. The first M hops of the connection represent paths leading from a source node to each of the M VNFs types deployed in the network. The last hop in the connection corresponds to the path from the VNF of type M to an ultimate destination node. This final segment ensures that the processed traffic, having passed through the designated VNFs, reaches its intended destination. The noted routing mechanism is strategically designed to balance the distribution of traffic across the VNFs while optimizing the overall network resource utilization and performance.

In the context of the VNF placement and routing, the optimal configuration of the network may be defined in part by at least the VNF node placement variable and the routing variable.

Regarding the placement variable of a node, such as a VNF, the placement may be represented by $y_k^m$. The placement variable $y_k^m$ is a binary variable (e.g., so it can have a value of 0 or 1) that indicates whether a VNF of type m is deployed at a node $k$. For example, if the placement variable is a 1, then the VNF of type m is located at node k, but if the placement variable is 0, then the VNF of type m is not located at node k. Specifically, placement variable $y_k^m$ is as follows:

$$y_k^m = \begin{cases} 1 & \text{if a VNF of type } m \text{ is placed at node } k \\ 0 & \text{otherwise} \end{cases}$$

A constraint $\Sigma_k\, y_k^m = v_m$ may be used to ensure that the total number of deployed VNFs of type m across all nodes of the network 1000 is equal to a specified quantity $v_m$. As noted, there are $v_m$ VNFs of type m, each of which with capacity $U_m$.

Regarding the routing variable, the routing variable $x_{ij}^{km}$ is defined as the fraction of traffic originating from node $i$ and destined for the final node j that is routed through an intermediate node $k$ in an m$^{th}$ segment. In other words, $x_{ij}^{km}$ represents the proportion of traffic from a source node to a destination node that traverses a specific VNF of type m located at intermediate node k during the routing process. These variables are used by the ML model to jointly determine the flow paths and ensuring that traffic is appropriately directed through the designated VNFs. The ML model uses the placement variable and the routing variable to optimize VNF placement and routing in the given network topology.

*Flows in the Network*

The following explains how the flow on the links of the network, such as network 100, and the flows to the VNFs are determined as a function of the placement variable (e.g., $y_k^m$) and the routing variable (e.g., $x_{ij}^{km}$). $\beta_{ij}(\ell)$ denotes the fraction of traffic that is routed on link $\ell$ when traffic is routed on the shortest path from node $i$ to node $j$. $\beta_{ij}(\ell)$ is not a decision variable, but the value of $\beta_{ij}(\ell)$ depends on the link weights of the network. If for example there is a single shortest path between node i and node j, $\beta_{ij}(\ell)$ equals 1 for all links on the shortest path. If equal-cost multi-path (ECMP) is used for example, then $0 \le \beta_{ij}(\ell) \le 1$. The traffic is directed from the source node to the destination node along $M+1$ hops, if there are $M$ VNF types.

*Virtual Traffic Matrix*

In some implementations, the ML model 160 uses a virtual traffic matrix. The virtual traffic matrix for a given hop $m$ is a matrix that represents the amount of traffic that has to be routed between a certain node $i$ and a final destination node $j$. The variable $\emptyset_{ij}^m(t)$ denotes the traffic flow that has to be routed between node $i$ and the final destination node $j$ in a subsequent segment (e.g., hop) $m$ for traffic pattern $t$. The equations that govern the virtual traffic matrix are the following:

$$\phi_{ij}^1(t) = d_{ij}(t)$$

$$\phi_{ij}^{m+1}(t) = \sum x_{kj}^{im} \phi_{kj}^m(t) \quad \text{for } m = 1, 2, \ldots, M \quad \forall t.$$

As the traffic incident on the network is $d_{ij}(t)$ for traffic pattern $t$, this represents the virtual traffic for the first hop. The virtual traffic for all subsequent hops (e.g., $\emptyset_{ij}^{m+1}(t)$) will depend on the routing that was done in the previous hop (e.g., $\emptyset_{kj}^m(t)$ and $x_{kj}^{im}$).

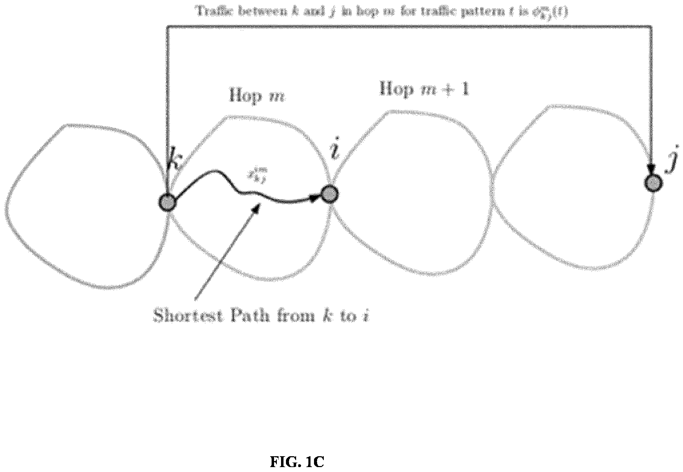

An example implementation for the computation of the virtual traffic matrix for the subsequent hops (e.g., $\emptyset_{ij}^{m+1}(t)$) is shown in FIG. 1C. The traffic from node i to destination node $j$ in hop $m+1$ is the aggregate of all flows from some node $k$ to destination node $j$ that is routed through node $i$ in hop $m$, wherein the aggregation is done over all nodes $k$. The fraction of flow from node $k$ to destination node $j$ routed though node $i$ in hop $m$ is $x_{kj}^{im}$. And, the total amount of flow from node $k$ to node $j$ in hop $m$ is $\emptyset_{kj}^m$. This gives the above equation for $\emptyset_{ij}^{m+1}(t)$ which is used to compute the virtual traffic matrix for hops 2 through $M+1$. The virtual traffic matrix may be used to determine all the link and VNF traffic loads.

*Computing Link and VNF Flows*

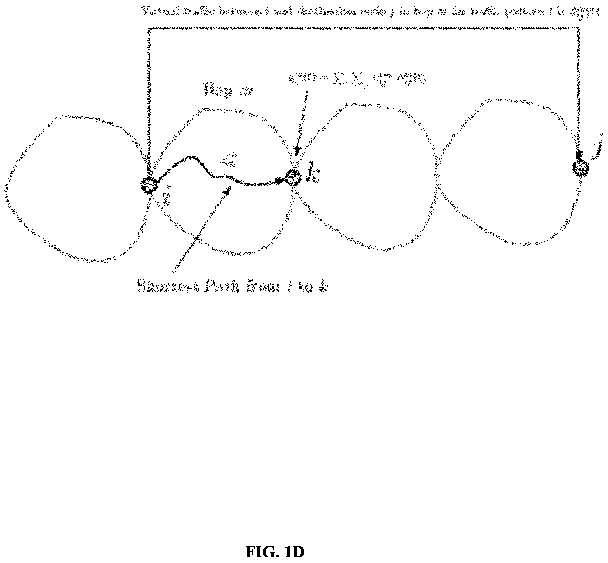

To compute link and VNF flows (for example, traffic flows through a VNF), the flow in each node in a hop $m$ is determined. This represents the flow into the VNFs. Let $\delta_k^m(t)$ denote the total flow (of traffic) into node $k$ in hop $m$ for traffic pattern $t$. The fraction of flow from node $i$ to destination node $j$ through node $k$ in hop m is denoted by $x_{ij}^{km}$; $\emptyset_{ij}^m(t)$ is the virtual traffic between node $i$ and destination node $j$ at hop m for traffic pattern t; the product of these two represents the amount of flow between $i$ and $j$ that is directed through node $k$. This computation is depicted in FIG. 1D. The sum over all the node pairs represents the total flow into node $k$ in hop $m$. So $\delta_k^m(t)$ can be represented as follows

$$\delta_k^m(t) = \sum_i \sum_j x_{ij}^{km} \phi_{ij}^m(t) \quad \text{for } 1 \le m \le M, \quad \forall k, t.$$

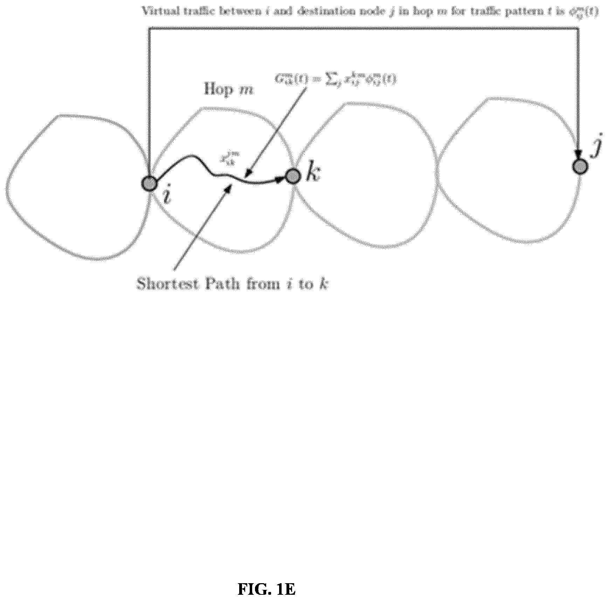

Next, the flow between notes $i$ and $k$ in hop $m$ for traffic pattern $t$ may be determined. For example, let $G_{ik}^m(t)$ represents the flow on the shortest path from node $i$ to node $k$ in hop $m$ for traffic pattern $t$ as shown in FIG. 1E. $G_{ik}^m(t)$ may be determined as

$$G_{ik}^m(t) = \sum_j x_{ij}^{km} \phi_{ij}^m(t) \quad m = 1, 2, \ldots, M, \quad \forall t.$$

wherein $x_{ij}^{km}$ is a fraction of traffic from node $i$ to node $j$ that is routed through node $k$ in hop $m$ and the product of this quantity of $\emptyset_{ij}^m(t)$. The virtual traffic matrix that is the traffic from node $i$ to node $j$ in hop $m$ gives the amount of $i$ through $j$ traffic routed through intermediate node $k$ in segment (also referred to herein as "hop") $m$. The sum over all the final destinations $j$ gives the traffic routed on the $i$ through $k$ shortest path in hop $m$. Once the flow on the shortest path is determined, it can be converted into link flows. The total flow $F(\ell, t)$ on a link $\ell$ for traffic pattern $t$ due to all the hop flows can be computed as follows:

$$F(\ell, t) = \sum_{m=1}^{m+1} \sum_i \sum_j G_{ij}^m(t)\, \beta_{ij}(\ell) \quad \forall \ell, t.$$

As noted, the $\beta_{ij}(\ell)$ is the fraction of flow on link $\ell$ when one unit of flow is sent from node $i$ to node $j$. The optimization problem of determining the optimal placement of VNFs to minimize the maximum link utilization over all the traffic patterns can be formulated for the ML model 160. The ML model's objective is to minimize the maximum link utilization (e.g., min $\delta$) over all the links across all traffic patterns. The description of the optimization constraints are provide after each constraint as follows:

Subject to:        min $\delta$

$$\sum_k x_{ij}^{km} = 1 \qquad \forall i, j, m \qquad \text{Flow conservation}$$

$$\phi_{kj}^{m+1}(t) = \sum_i x_{ij}^{km}\, \phi_{ij}^m(t) \qquad \forall k, j, m, t \qquad \text{Traffic matrix computation}$$

$$\phi_{kj}^1 = d_{kj} \qquad \forall k, j \qquad \text{Initial traffic matrix}$$

$$\sum_m \sum_i \sum_j \sum_k x_{ik}^{jm} \phi_{ik}^m(t) \beta_{ij}(\ell) \leq C(\ell) \qquad \forall \ell, t \qquad \text{Link capacity}$$

$$\sum_i \sum_j x_{ij}^{km}\, \phi_{ij}^m(t) \leq U_m\, y_k^m \qquad \forall k, m, t \qquad \text{VNF capacity}$$

$$\sum_k y_k^m = v_m \qquad \forall m \qquad \text{VNF placement count}$$

$$x_{ij}^{km} \geq 0 \qquad \forall i, j, k, m \qquad \text{Non-negativity}$$

$$y_k^m \in \{0, 1\} \qquad \forall k, m \qquad \text{Binary VNF placement}$$

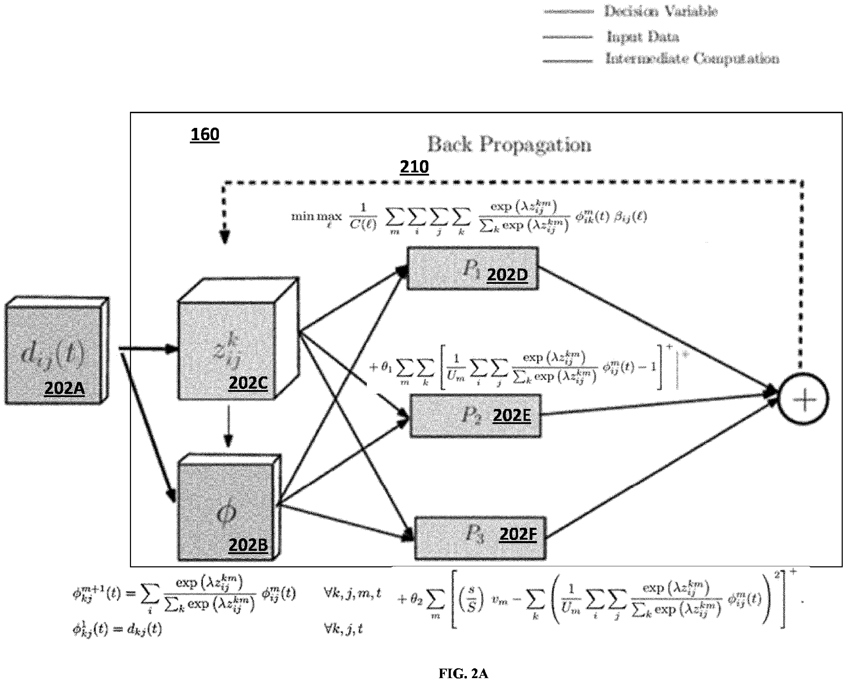

The integer optimization problem noted above may be reformulated for execution on a ML model 160. FIG. 2A depicts an example of a machine learning model 160, in accordance with some example embodiments. For example, the machine learning model 160 may comprise a neural network, a deep learning neural network, and/or the like, and the ML model 160 may be configured using for example, PyTorch or other neural network or machine learning model building tool. In the example of FIG. 2A, the machine learning model 160 uses back propagation and gradient descent to solve the objective function given the constraints.

Before going into the details of the ML model 160, the following describes the reformulation of the constraints so they can execute in an ML model, such as a neural network.

In a neural network for example, the implementation of the optimization problem should be in a continuous and unconstrained form, so that stochastic gradient descent can be applied to the solve the problem. To remove the normalizing constraint on the $x_{ij}^{km}$ variable, a new unconstrained variable $z_{ij}^{km}$ can be used, so

$$x_{ij}^{km} = \frac{\exp\left(\lambda z_{ij}^{km}\right)}{\sum_k \exp\left(\lambda z_{ij}^{km}\right)}.$$

wherein $\lambda$ represents a scalar and is generally set to 1, exp represents an exponential function, and $z_{ij}^{km}$ represents the variable that is a scaled version of $x_{ij}^{km}$ and $x_{ij}^{km}$ is unconstrainted. This equation ensures that the sum of the $x_{ij}^{km}$ equals 1 for all $i, j,$ and $m.$ Consider the VNF capacity constraint,

$$\sum_i \sum_j x_{ij}^{km} \, \phi_{ij}^m(t) \leq U_m \, y_k^m \quad \forall k, m, t$$

and we can define

$$y_k^m = \max_t \frac{1}{U_m} \sum_i \sum_j x_{ij}^{km} \, \phi_{ij}^m(t)$$

so with this definition

$$\sum_k y_k^m = v_m$$

wherein $v_m$ is the required number of VNFs of type $m,$ while ensuring $y_k^m \leq 1$ for all $k$ and $m.$ *Enforcing Integrality*

As the VNF placement constraints are binary, a continuous formulation is needed that enforces the binary constraint. To that end, the following constrain is introduced:

$$\sum_k [y_k^m]^2 \geq v_m.$$

The only feasible solution to the following set of equations/inequalities:

$$\sum_k y_k^m = v_m \qquad \text{Sum of Variables Constraint}$$

$$\sum_k [y_k^m]^2 \geq v_m \qquad \text{Sum Squares Constraint}$$

$$0 \leq y_k^m \leq 1 \qquad \text{Lower and Upper Bounds}$$

is when exactly $v_m$ of the $y_k^m$ variables are set to one, and the remaining variables are set to zero. And, the joint placement and routing problem may be re-formulated as the following optimization problem:

$$\min \max_{\ell} \frac{1}{C(\ell)} \sum_{m} \sum_{i} \sum_{j} \sum_{k} \frac{\exp\left(\lambda z_{ij}^{km}\right)}{\sum_{k} \exp\left(\lambda z_{ij}^{km}\right)} \phi_{ik}^{m}(t) \, \beta_{ij}(\ell)$$

wherein:

$$\phi_{kj}^{m+1}(t) = \sum_{i} \frac{\exp\left(\lambda z_{ij}^{km}\right)}{\sum_{k} \exp\left(\lambda z_{ij}^{km}\right)} \phi_{ij}^{m}(t) \qquad \forall k, j, m, t \qquad \text{Flow computation in hop m + 1}$$

$$\phi_{kj}^{1}(t) = d_{kj}(t) \qquad \forall k, j, t \qquad \text{Initial traffic matrix}$$

$$\frac{1}{U_m} \sum_{i} \sum_{j} \frac{\exp\left(\lambda z_{ij}^{km}\right)}{\sum_{k} \exp\left(\lambda z_{ij}^{km}\right)} \phi_{ij}^{m}(t) \leq 1 \qquad \forall k, m, t \qquad \text{VNF capacity constraint}$$

$$\sum_{k} \max_{t} \left[ \frac{1}{U_m} \sum_{i} \sum_{j} \frac{\exp\left(\lambda z_{ij}^{km}\right)}{\sum_{k} \exp\left(\lambda z_{ij}^{km}\right)} \phi_{ij}^{m}(t) \right]^2 \geq v_m \qquad \forall k, m \qquad \text{Integrality Enforcement}$$

A LaGrange relaxation may be used to enforce the VNF capacity and integrality constraints by using penalty multipliers of $\theta_1$ and $\theta_2$ as follows:

$$\min \max_{\ell} \frac{1}{C(\ell)} \sum_{m} \sum_{i} \sum_{j} \sum_{k} \frac{\exp\left(\lambda z_{ij}^{km}\right)}{\sum_{k} \exp\left(\lambda z_{ij}^{km}\right)} \phi_{ik}^{m}(t) \, \beta_{ij}(\ell)$$

$$+ \theta_1 \sum_{m} \sum_{k} \left[ \frac{1}{U_m} \sum_{i} \sum_{j} \frac{\exp\left(\lambda z_{ij}^{km}\right)}{\sum_{k} \exp\left(\lambda z_{ij}^{km}\right)} \phi_{ij}^{m}(t) - 1 \right]^{+}$$

$$+ \theta_2 \sum_{m} \left[ v_m - \sum_{k} \left( \frac{1}{U_m} \sum_{i} \sum_{j} \frac{\exp\left(\lambda z_{ij}^{km}\right)}{\sum_{k} \exp\left(\lambda z_{ij}^{km}\right)} \phi_{ij}^{m}(t) \right)^2 \right]^{+}$$

where:

$$\phi_{kj}^{m+1}(t) = \sum_{i} \frac{\exp\left(\lambda z_{ij}^{km}\right)}{\sum_{k} \exp\left(\lambda z_{ij}^{km}\right)} \phi_{ij}^{m}(t) \qquad \forall k, j, m, t \qquad \text{Flow computation in hop m + 1}$$

$$\phi_{kj}^{1}(t) = d_{kj}(t) \qquad \forall k, j, t \qquad \text{Initial traffic matrix}$$

Referring again to FIG. 2A, the ML model 160 uses backpropagation 210 to optimize P1 202D, which corresponds to

$$\min \max_{\ell} \frac{1}{C(\ell)} \sum_{m} \sum_{i} \sum_{j} \sum_{k} \frac{\exp\left(\lambda z_{ij}^{km}\right)}{\sum_{k} \exp\left(\lambda z_{ij}^{km}\right)} \phi_{ik}^{m}(t) \, \beta_{ij}(\ell)$$

, given the following constraints:

P2 202E which is as follows

$$+\theta_1 \sum_m \sum_k \left[ \frac{1}{U_m} \sum_i \sum_j \frac{\exp\left(\lambda z_{ij}^{km}\right)}{\sum_k \exp\left(\lambda z_{ij}^{km}\right)} \phi_{ij}^m(t) - 1 \right]^+ ,$$

and

P3 202F, which is as follows

$$+\theta_2 \sum_m \left[ v_m - \sum_k \left( \frac{1}{U_m} \sum_i \sum_j \frac{\exp\left(\lambda z_{ij}^{km}\right)}{\sum_k \exp\left(\lambda z_{ij}^{km}\right)} \phi_{ij}^m(t) \right)^2 \right]^+ .$$

The placement of a VNF can be derived by the value of $v_m$ at P3.

*Gradual Enforcement of Integrality*

When running the ML model 160, integrality may be is enforced gradually. If the ML model runs for a total of S iterations and the current iteration is s, then the overall objective is:

$$\min_\ell \max \frac{1}{C(\ell)} \sum_m \sum_i \sum_j \sum_k \frac{\exp\left(\lambda z_{ij}^{km}\right)}{\sum_k \exp\left(\lambda z_{ij}^{km}\right)} \phi_{ik}^m(t)\, \beta_{ij}(\ell)$$

$$+\theta_1 \sum_m \sum_k \left[ \frac{1}{U_m} \sum_i \sum_j \frac{\exp\left(\lambda z_{ij}^{km}\right)}{\sum_k \exp\left(\lambda z_{ij}^{km}\right)} \phi_{ij}^m(t) - 1 \right]^+$$

$$+\theta_2 \sum_m \left[ \left(\frac{s}{S}\right) v_m - \sum_k \left( \frac{1}{U_m} \sum_i \sum_j \frac{\exp\left(\lambda z_{ij}^{km}\right)}{\sum_k \exp\left(\lambda z_{ij}^{km}\right)} \phi_{ij}^m(t) \right)^2 \right]^+ .$$

To enforce the integrality gradually, initially (s = 0), the integrality constraint is not enforced and is fully enforced when s - *S*.

*Solving the Routing Problem for a Fixed Placement*

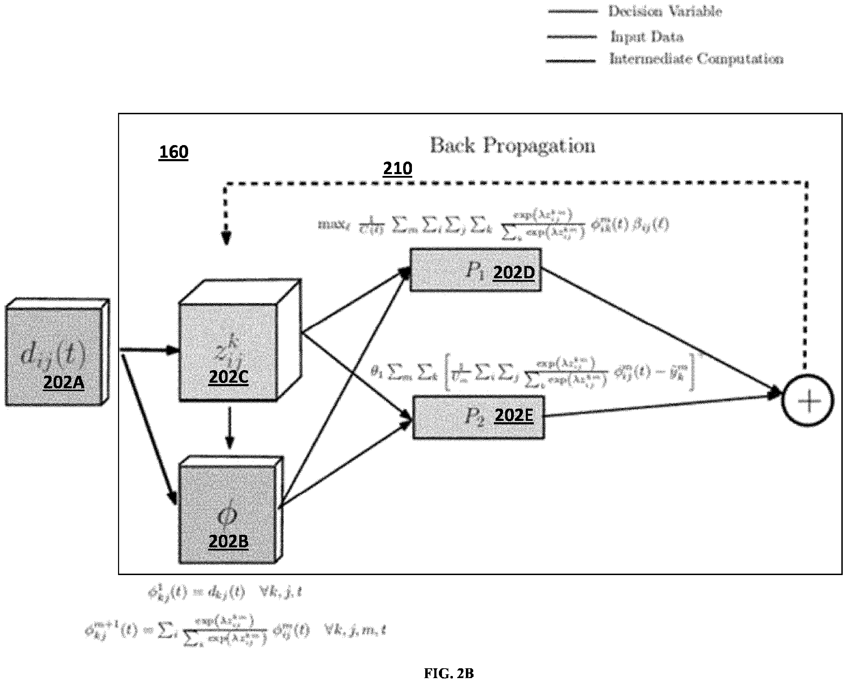

After solving the joint placement and routing problem, the ML model 160 may run again by solving for the routing problem but having a fixed placement of the VNFs. This is depicted at FIG. 2B. For example, let $\tilde{y}_k^m$ denote the fixed assignment of the VNFs. As it satisfies the placement and integrality constraints, the following may be used

$$\sum_k \tilde{y}_k^m = v_m \qquad \forall m$$

$$\tilde{y}_k^m \in \{0, 1\} \qquad \forall k, m$$

So the routing problem above can we revised as

$$\min_\ell \max \frac{1}{C(\ell)} \sum_m \sum_i \sum_j \sum_k \frac{\exp\left(\lambda z_{ij}^{km}\right)}{\sum_k \exp\left(\lambda z_{ij}^{km}\right)} \phi_{ik}^m(t)\, \beta_{ij}(\ell)$$

$$+ \theta_1 \sum_m \sum_k \frac{1}{U_m} \sum_i \sum_j \frac{\exp\left(\lambda z_{ij}^{km}\right)}{\sum_k \exp\left(\lambda z_{ij}^{km}\right)} \phi_{ij}^m(t) - \tilde{y}_k^m$$

where:

$$\phi_{kj}^{m+1}(t) = \sum_i \frac{\exp\left(\lambda z_{ij}^{km}\right)}{\sum_k \exp\left(\lambda z_{ij}^{km}\right)} \phi_{ij}^m(t) \qquad \forall k, j, m, t \qquad \text{Flow computation in hop } m + 1$$

$$\phi_{kj}^1(t) = d_{kj}(t) \qquad \forall k, j, t \qquad \text{Initial traffic matrix}$$

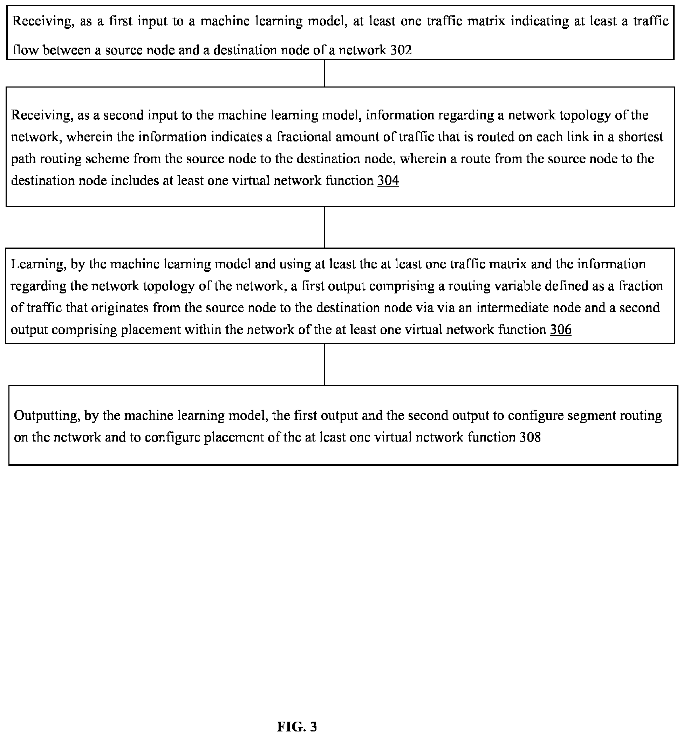

FIG. 3 depicts an example process for determining routing for a network and node placement of for example VNFs, in accordance with some embodiments.

At 302, the process may include receiving, as a first input to a machine learning model, at least one traffic matrix indicating at least a traffic flow between a source node and a destination node of a network, in accordance with some embodiments. Referring to FIG. 2A for example, the ML model 160 may receive as a first input one or more traffic matrixes, such as $d_{ij}(t)$ 202A, which represents a traffic pattern $t$ for network 1000. For the first hop between for example node 102A and node 102C, the value of Ø 202B (virtual traffic matrix) is equal to $d_{ij}(t)$. For subsequent segments (also referred to as hops), the value of the virtual traffic matrix Ø *202B* is $\emptyset_{ij}^{m+1}(t)$ as noted above.

At 304, the process may include receiving, as a second input to the machine learning model, information regarding a network topology of the network, in accordance with some embodiments. For example, the ML model 160 may receive $\beta_{ij}(\ell)$ which provides network topology information in the form of information indicative of the fraction of traffic that is routed on link $\ell$ when traffic is routed on the shortest path from node $i$ to node $j$, wherein a route from the source node to the destination node includes at least one virtual network function, in accordance with some embodiments. For example, $\beta_{ij}(\ell)$ denotes the fraction of traffic that is routed on a link $\ell$ between node 102A and 102C where a VNF is being considered for placement.

At 306, the process may include learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function, in accordance with some embodiments. For example, the ML model 160 depicted at FIG. 2A may learn (based at least in part of the received ttraffic matrix and network topology) a first output corresponding to a routing variable, such as $z_{ij}^k$ 202C which indicates a fraction of traffic that originates from the source node 102A to the destination node 102B via via an intermediate node, such as node k 102C where a VNF is placed and learn a second output corresponding to the placement 202B within the network of the at least one virtual network function. As noted, $z_{ij}^k$ may be used derive the $x_{ij}^{km}$ variable. And the ML model 160 depicted at FIG. 2A may learn (based at least in part of the received ttraffic matrix and network topology) a second output corresponding to the placement within the network. The placement of a VNF can be derived by the value of $v_m$ at P3 202F, which corresponds the Integrality Enforcement constraint at P3.

During learning via backpropagation 210, the learning minimizes the maximum link utilization over all the links across all traffic patterns, which corresponds to P1 202D as follows

$$\min_\ell \max \frac{1}{C(\ell)} \sum_m \sum_i \sum_j \sum_k \frac{\exp\left(\lambda z_{ij}^{km}\right)}{\sum_k \exp\left(\lambda z_{ij}^{km}\right)} \phi_{ik}^m(t)\, \beta_{ij}(\ell)$$

,

while P2 202E represents a capacity constraint for the VNFs as follows

$$+ \theta_1 \sum_m \sum_k \left[ \frac{1}{U_m} \sum_i \sum_j \frac{\exp\left(\lambda z_{ij}^{km}\right)}{\sum_k \exp\left(\lambda z_{ij}^{km}\right)} \phi_{ij}^m(t) - 1 \right]^+ ,$$

and

P3 202F provides a gradual learning constraint as follows

$$+ \theta_2 \sum_m \left[ \left(\frac{s}{S}\right) v_m - \sum_k \left( \frac{1}{U_m} \sum_i \sum_j \frac{\exp\left(\lambda z_{ij}^{km}\right)}{\sum_k \exp\left(\lambda z_{ij}^{km}\right)} \phi_{ij}^m(t) \right)^2 \right]^+ .$$

The learning via backpropagation 210 adjusts the value of $z_{ij}^k$ until a solution is found via gradient descent for example. For example, the ML model 160 iterates over different input traffic models provided at 202A until the ML model converges in accordance with the objective functions of P1-P3 to provide the solution of the VNF placement(s) in the network and routing variables in the network.

At 308, the process may include outputting, by the machine learning model, the first output and the second output to configure segment routing on the network and to configure placement of the at least one virtual network function, in accordance with some embodiments. When the ML model 160 determines the first and second output, these outputs are provided to a network management system to configure placement of VNFs in network 100 and the routing parameters for the nodes of network 1000.

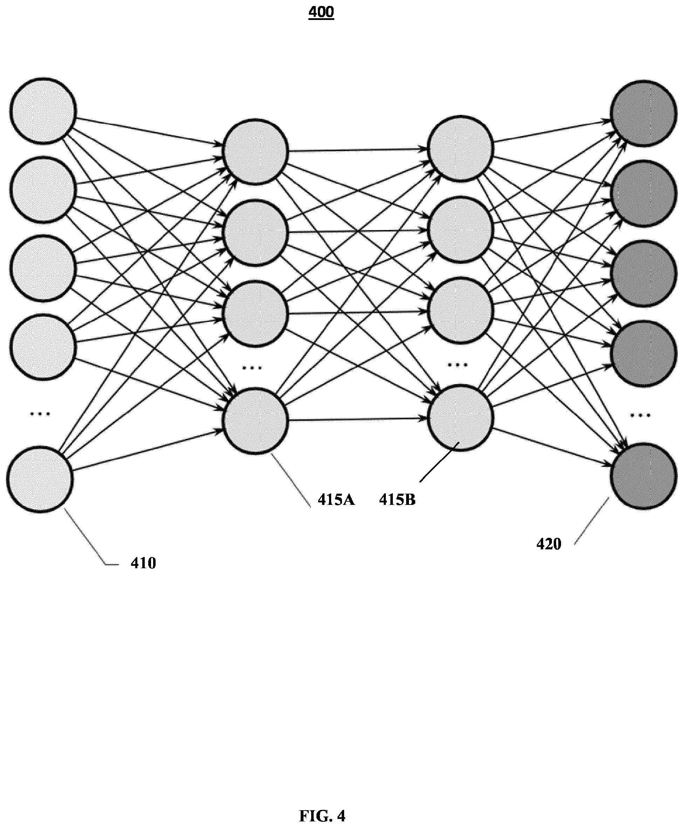

FIG. 4 depicts an example of a machine learning (ML) model 400, in accordance with some embodiments. Specifically, FIG. 4 depicts training of the ML model 400, such that the ML model learns, using at least at least one traffic matrix 152 and information regarding a network topology of the network 1000, an output 156 comprising a routing variable (which is defined as a fraction of traffic that originates from a source node to a destination node via an intermediate node) and a VNF placement within the network 1000. In the example of FIG. 4, the ML model 400 may be used as the ML model 160. The input layer 410 may include a node for each node in the network. The ML model may include one or more hidden layers 415A-B (also referred to as intermediate layers) and an output layer 420. The machine learning model 400 may be comprised in a network node, a user equipment, and/or other computer-based system. Alternatively, or additionally, the ML model may be provided as a service, such as a cloud service (accessible at a computing system such as a server via a network such as the Internet or other type of network).

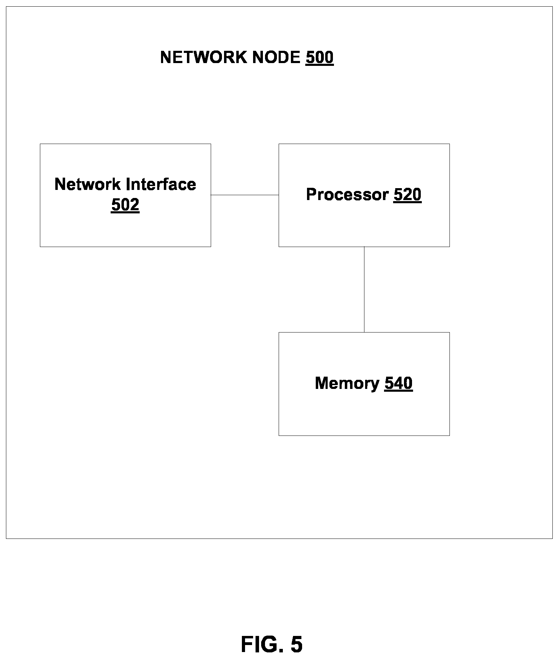

FIG. 5 depicts a block diagram of a network node 500, in accordance with some embodiments. As noted, the machine learning model 400 or 160 (and/or the network management system 150) may be comprised in a network node. The network node 500 may comprise or be comprised in one or more network side nodes or functions. The network node 500 may include a network interface 502, a processor 520, and a memory 504, in accordance with some embodiments. The network interface 502 may include wired and/or wireless transceivers to enable access other nodes including base stations, other network nodes, the Internet, other networks, and/or other nodes. The memory 504 may comprise volatile and/or non-volatile memory including program code, which when executed by at least one processor 520 provides, among other things, the processes disclosed herein. For example, the network management system 150 and/or ML model 160 may be comprised in a network node.

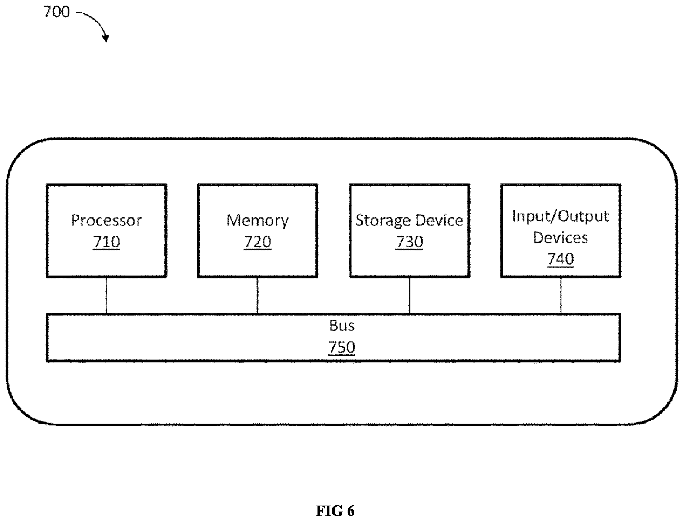

FIG. 6 depicts a block diagram illustrating a computing system 700, in accordance with some embodiments. For example, the network management system 150 and/or ML model 160 (or 400) may be comprised the system 700. As shown in FIG. 6, the computing system 700 can include a processor 710, a memory 720, a storage device 730, and input/output devices 740. The processor 710, the memory 720, the storage device 730, and the input/output devices 740 can be interconnected via a system bus 750. The processor 710 is capable of processing instructions for execution within the computing system 700. In some implementations of the current subject matter, the processor 710 can be a single-threaded processor. Alternately, the processor 710 can be a multi-threaded processor. The process may be a multi-core processor have a plurality or processors or a single core processor. Alternatively, or additionally, the processor 710 can be a graphics processor unit (GPU), an AI chip, and/or the like. The processor 710 is capable of processing instructions stored in the memory 720 and/or on the storage device 730 to display graphical information for a user interface provided via the input/output device 740. The memory 720 is a computer readable medium such as volatile or non-volatile that stores information within the computing system 700. The memory 720 can store data structures representing configuration object databases, for example. The storage device 730 is capable of providing persistent storage for the computing system 700. The storage device 730 can be a floppy disk device, a hard disk device, an optical disk device, or a tape device, or other suitable persistent storage means. The input/output device 740 provides input/output operations for the computing system 700. In some implementations of the current subject matter, the input/output device 740 includes a keyboard and/or pointing device. In various implementations, the input/output device 740 includes a display unit for displaying graphical user interfaces. According to some implementations of the current subject matter, the input/output device 740 can provide input/output operations for a network device. For example, the input/output device 740 can include Ethernet ports or other networking ports to communicate with one or more wired and/or wireless networks (e.g., a local area network (LAN), a wide area network (WAN), the Internet).

Without in any way limiting the scope, interpretation, or application of the claims appearing below, a technical effect of one or more of the example embodiments disclosed herein may include enhanced placement of nodes, such as VNF nodes, in a network and determination of routing in the network including the VNFs.

In view of the above-described implementations of subject matter this application discloses the following list of examples, wherein one feature of an example in isolation or more than one feature of said example taken in combination and, optionally, in combination with one or more features of one or more further examples are further examples also falling within the disclosure of this application.

Example 1: A method comprising:

receiving, as a first input to a machine learning model, at least one traffic matrix indicating at least a traffic flow between a source node and a destination node of a network;
receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function;
learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function; and
outputting, by the machine learning model, the first output and the second output to configure segment routing on the network and to configure placement of the at least one virtual network function.

Example 2: The method of Example 1, wherein the learning by the machine learning model further comprises using, as the at least one traffic matrix, an initial traffic matrix for an initial segment from the source node to a first intermediate node where a first virtual network function is placed.

Example 3: The method of any of Examples 1-2, wherein the learning of the first output and the second output further comprises minimizing a maximum link utilization for the one or more links of the network while constraining the learning based on a capacity of a first virtual network function type and a placement count of the first virtual network function type.

Example 4: The method of any of Examples 1-3, wherein the learning iterates over each segment of the network between the source node and the destination node, wherein each segment represents a placement location for a corresponding virtual network function.

Example 5: The method of any of Examples 1-4, wherein the learning by the machine learning model further comprises using, as the at least one traffic matrix, a virtual traffic matric indicating an updated traffic flow the segment, which represents the placement location for the corresponding virtual network function, to the destination node.

Example 6: The method of any of Examples 1-5, wherein the machine learning model comprises a neural network, and wherein the learning is based at least on backpropagation to learn the first output.

Example 7: The method of any of Examples 1-6, wherein the learning further comprises fixing the second output comprising placement within the network of the at least one virtual network function, and continuing the learning, by the machine learning model, to further an updated first output comprising an updated routing variable.

Example 8: An apparatus comprising:

at least one processor; and
at least one memory including instructions which when executed by the at least one processor causes operations comprising:

receiving, as a first input to a machine learning model, at least one traffic matrix indicating at least a traffic flow between a source node and a destination node of a network;
receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function;

learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function; and

outputting, by the machine learning model, the first output and the second output to configure segment routing on the network and to configure placement of the at least one virtual network function.

Example 9: The apparatus of Example 8, wherein the learning by the machine learning model further comprises using, as the at least one traffic matrix, an initial traffic matrix for an initial segment from the source node to a first intermediate node where a first virtual network function is placed.

Example 10: The apparatus of any of Examples 8-9, wherein the learning of the first output and the second output further comprises minimizing a maximum link utilization for the one or more links of the network while constraining the learning based on a capacity of a first virtual network function type and a placement count of the first virtual network function type.

Example 11: The apparatus of any of Examples 8-10, wherein the learning iterates over each segment of the network between the source node and the destination node, wherein each segment represents a placement location for a corresponding virtual network function.

Example 12: The apparatus of any of Examples 8-11, wherein the learning by the machine learning model further comprises using, as the at least one traffic matrix, a virtual traffic matric indicating an updated traffic flow the segment, which represents the placement location for the corresponding virtual network function, to the destination node.

Example 13: The apparatus of any of Examples 8-12, wherein the machine learning model comprises a neural network, and wherein the learning is based at least on backpropagation to learn the first output.

Example 14: The apparatus of any of Examples 8-13, wherein the learning further comprises fixing the second output comprising placement within the network of the at least one virtual network function, and continuing the learning, by the machine learning model, to further an updated first output comprising an updated routing variable.

Example 15: A non-transitory computer-readable storage medium including instructions which when executed by at least one processor causes operations comprising:

receiving, as a first input to a machine learning model, at least one traffic matrix indicating at least a traffic flow between a source node and a destination node of a network;

receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function;

learning, by the machine learning model and using at least the at least one traffic matrix and the information regarding the network topology of the network, a first output comprising a routing variable defined as a fraction of traffic that originates from the source node to the destination node via an intermediate node and a second output comprising placement within the network of the at least one virtual network function; and

outputting, by the machine learning model, the first output and the second output to configure segment routing on the network and to configure placement of the at least one virtual network function.

Example 16: An apparatus comprising:

means for receiving, as a first input to a machine learning model, at least one traffic matrix indicating at least a traffic flow between a source node and a destination node of a network;

means for receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function;

means for learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function; and

means for outputting, by the machine learning model, the first output and the second output to configure segment routing on the network and to configure placement of the at least one virtual network function.

Example 17: The apparatus of Example 16 further comprising means for any of the functions recited in any of Examples 2-7.

The subject matter described herein may be embodied in systems, apparatus, methods, and/or articles depending on the desired configuration. For example, the base stations and user equipment (or one or more components therein) and/or the processes described herein can be implemented using one or more of the following: a processor executing program code, an application-specific integrated circuit (ASIC), a digital signal processor (DSP), an embedded processor, a field programmable gate array (FPGA), and/or combinations thereof. These various implementations may include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device. These computer programs (also known as programs, software, software applications, applications, components, program code, or code) include machine instructions for a programmable processor, and may be implemented in a high-level procedural and/or object-oriented programming language, and/or in assembly/machine language. As used herein, the term "computer-readable medium" refers to any computer program product, machine-readable medium, computer-readable storage medium, apparatus and/or device (for example, magnetic discs, optical disks, memory, Programmable Logic Devices (PLDs)) used to provide machine instructions and/or data to a programmable processor, including a machine-readable medium that receives machine instructions. Similarly, systems are also described herein that may include a processor and a memory coupled to the processor. The memory may include one or more programs that cause the processor to perform one or more of the operations described herein.

Although a few variations have been described in detail above, other modifications or additions are possible. In particular, further features and/or variations may be provided in addition to those set forth herein. Moreover, the implementations described above may be directed to various combinations and subcombinations of the disclosed features and/or combinations and subcombinations of several further features disclosed above. Other embodiments may be within the scope of the following claims.

If desired, the different functions discussed herein may be performed in a different order and/or concurrently with each other. Furthermore, if desired, one or more of the above-described functions may be optional or may be combined. Although various aspects of some of the embodiments are set out in the independent claims, other aspects of some of the embodiments comprise other combinations of features from the described embodiments and/or the dependent claims with the features of the independent claims, and not solely the combinations explicitly set out in the claims. It is also noted herein that while the above describes example embodiments, these descriptions should not be viewed in a limiting sense. Rather, there are several variations and modifications that may be made without departing from the scope of some of the embodiments as defined in the appended claims. Other embodiments may be within the scope of the following claims. The term "based on" includes "based on at least." The use of the phase "such as" means "such as for example" unless otherwise indicated.

**Claims**

1. A method comprising:

   receiving, as a first input to a machine learning model, at least one traffic matrix indicating at least a traffic flow between a source node and a destination node of a network;
   receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function;
   learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function; and
   outputting, by the machine learning model, the first output and the second output to configure segment routing on the network and to configure placement of the at least one virtual network function.

2. The method of claim 1, wherein the learning by the machine learning model further comprises using, as the at least one traffic matrix, an initial traffic matrix for an initial segment from the source node to a first intermediate node where a first virtual network function is placed.

3. The method of claim 1, wherein the learning of the first output and the second output further comprises minimizing a maximum link utilization for the one or more links of the network while constraining the learning based on a capacity of a first virtual network function type and a placement count of the first virtual network function type.

4. The method of claim 1, wherein the learning iterates over each segment of the network between the source node and the destination node, wherein each segment represents a placement location for a corresponding virtual network function.

5. The method of claim 4, wherein the learning by the machine learning model further comprises using, as the at least one traffic matrix, a virtual traffic matric indicating an updated traffic flow the segment, which represents the placement location for the corresponding virtual network function, to the destination node.

6. The method of claim 1, wherein the machine learning model comprises a neural network, and wherein the learning is based at least on backpropagation to learn the first output.

7. The method of claim 1, wherein the learning further comprises fixing the second output comprising placement within the network of the at least one virtual network function, and continuing the learning, by the machine learning model, to further an updated first output comprising an updated routing variable.

8. An apparatus comprising:
at least one processor; and
at least one memory including instructions which when executed by the at least one processor causes operations comprising:

receiving, as a first input to a machine learning model, at least one traffic matrix indicating at least a traffic flow between a source node and a destination node of a network;
receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function;
learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function; and
outputting, by the machine learning model, the first output and the second output to configure segment routing on the network and to configure placement of the at least one virtual network function.

9. The apparatus of claim 8, wherein the learning by the machine learning model further comprises using, as the at least one traffic matrix, an initial traffic matrix for an initial segment from the source node to a first intermediate node where a first virtual network function is placed.

10. The apparatus of claim 8, wherein the learning of the first output and the second output further comprises minimizing a maximum link utilization for the one or more links of the network while constraining the learning based on a capacity of a first virtual network function type and a placement count of the first virtual network function type.

11. The apparatus of claim 8, wherein the learning iterates over each segment of the network between the source node and the destination node, wherein each segment represents a placement location for a corresponding virtual network function.

12. The apparatus of claim 11, wherein the learning by the machine learning model further comprises using, as the at least one traffic matrix, a virtual traffic matric indicating an updated traffic flow the segment, which represents the placement location for the corresponding virtual network function, to the destination node.

13. The apparatus of claim 8, wherein the machine learning model comprises a neural network, and wherein the learning is based at least on backpropagation to learn the first output.

14. The apparatus of claim 8, wherein the learning further comprises fixing the second output comprising placement within the network of the at least one virtual network function, and continuing the learning, by the machine learning model, to further an updated first output comprising an updated routing variable.

15. A non-transitory computer-readable storage medium including instructions which when executed by at least one processor causes operations comprising:

receiving, as a first input to a machine learning model, at least one traffic matrix indicating at least a traffic flow between a source node and a destination node of a network;

receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function;

learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function; and

outputting, by the machine learning model, the first output and the second output to configure segment routing on the network and to configure placement of the at least one virtual network function.

16. An apparatus comprising:

means for receiving, as a first input to a machine learning model, at least one traffic matrix indicating at least a traffic flow between a source node and a destination node of a network;

means for receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function;

means for learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function; and

means for outputting, by the machine learning model, the first output and the second output to configure segment routing on the network and to configure placement of the at least one virtual network function.

Network Management System 150

ML Model 160

Output:
-Routing variable
-VNF placement

156

Input:
Traffic
Matrixes

152

Hop 2

Hop 3

Hop 1

$i$

$k$

$\ell$

$j$

1000

FIG. 1A

1000

Hop 2

102D

Hop 3

Hop 1

$\ell$

$i$

$k$ 102C

102A

102E

$j$

102B

**FIG. 1B**

FIG. 1C

EP 4 687 332 A1

FIG. 1D

20

**FIG. 1E**

Decision Variable

Input Data

Intermediate Computation

**160**

Back Propagation

**210**

$$\min_{\ell} \max \ \frac{1}{C(\ell)} \sum_m \sum_i \sum_j \sum_k \frac{\exp\left(\lambda z_{ij}^{km}\right)}{\sum_k \exp\left(\lambda z_{ij}^{km}\right)} \phi_{ik}^m(t)\, \beta_{ij}(t)$$

$d_{ij}(t)$

**202A**

$z_{ij}^k$

**202C**

$\phi$

**202B**

$P_1$ **202D**

$$+\,\theta_1 \sum_m \sum_j \sum_k \left[ \frac{1}{U_m} \sum_i \sum_j \frac{\exp\left(\lambda z_{ij}^{km}\right)}{\sum_k \exp\left(\lambda z_{ij}^{km}\right)} \phi_{ij}^m(t) - 1 \right]^{+} \Big|^{*}$$

$P_2$ **202E**

$P_3$ **202F**

$+$

$$\phi_{kj}^{m+1}(t) = \sum_i \frac{\exp\left(\lambda z_{ij}^{km}\right)}{\sum_k \exp\left(\lambda z_{ij}^{km}\right)} \phi_{ij}^m(t) \qquad \forall k, j, m, t$$

$$\phi_{kj}^{1}(t) = d_{kj}(t) \qquad \forall k, j, t$$

$$+\,\theta_2 \sum_m \left[ \left(\frac{s}{S}\right) v_m - \sum_k \left( \frac{1}{U_m} \sum_i \sum_j \frac{\exp\left(\lambda z_{ij}^{km}\right)}{\sum_k \exp\left(\lambda z_{ij}^{km}\right)} \phi_{ij}^m(t) \right)^2 \right]^{+}.$$

**FIG. 2A**

FIG. 2B

Receiving, as a first input to a machine learning model, at least one traffic matrix indicating at least a traffic flow between a source node and a destination node of a network 302

Receiving, as a second input to the machine learning model, information regarding a network topology of the network, wherein the information indicates a fractional amount of traffic that is routed on each link in a shortest path routing scheme from the source node to the destination node, wherein a route from the source node to the destination node includes at least one virtual network function 304

Learning, by the machine learning model and using at least the at least one traffic matrix and the information regarding the network topology of the network, a first output comprising a routing variable defined as a fraction of traffic that originates from the source node to the destination node via via an intermediate node and a second output comprising placement within the network of the at least one virtual network function 306

Outputting, by the machine learning model, the first output and the second output to configure segment routing on the network and to configure placement of the at least one virtual network function 308

**FIG. 3**

<u>400</u>

415A    415B

410

420

FIG. 4

NETWORK NODE **500**

| Network Interface **502** | Processor **520** |

Memory **540**

FIG. 5

700

| Processor 710 | Memory 720 | Storage Device 730 | Input/Output Devices 740 |

Bus
750

**FIG 6**

**EUROPEAN SEARCH REPORT**

Application Number

EP 25 19 1489

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PHAM TUAN-MINH: "Traffic Engineering Based on Reinforcement Learning for Service Function Chaining With Delay Guarantee", IEEE ACCESS, IEEE, USA, vol. 9, 31 August 2021 (2021-08-31), pages 121583-121592, XP011877171, DOI: 10.1109/ACCESS.2021.3109269 [retrieved on 2021-09-08] | 1-6, 8-13,15, 16 | INV. H04L45/02 H04L45/00 |
| A | * page 5, left-hand column, line 22 - page 5, right-hand column, line 31 * | 7,14 | |
| A | BRAJESH KUMAR UMRAO ET AL: "Placement of virtual network functions for network services", INTERNATIONAL JOURNAL OF NETWORK MANAGEMENT, WILEY, GB, vol. 33, no. 6, 29 April 2023 (2023-04-29) , page n/a, XP072528327, ISSN: 1055-7148, DOI: 10.1002/NEM.2232 * the whole document * | 1-16 | |
| A | SUN PENGHAO ET AL: "Combining Deep Reinforcement Learning With Graph Neural Networks for Optimal VNF Placement", IEEE COMMUNICATIONS LETTERS, IEEE SERVICE CENTER, PISCATAWAY, NJ, US, vol. 25, no. 1, 21 September 2020 (2020-09-21), pages 176-180, XP011829946, ISSN: 1089-7798, DOI: 10.1109/LCOMM.2020.3025298 [retrieved on 2021-01-07] * the whole document * | 1-16 | TECHNICAL FIELDS SEARCHED (IPC) H04L |

The present search report has been drawn up for all claims

| Place of search | Date of completion of the search | Examiner |
|---|---|---|
| The Hague | 20 November 2025 | Perrier, Samuel |